**Europäisches Patentamt**

(19) **European Patent Office**

**Office européen des brevets**

(11) Veröffentlichungsnummer: **0 173 863**
**B1**

(12) **EUROPÄISCHE PATENTSCHRIFT**

(45) Veröffentlichungstag der Patentschrift:
24.02.88

(51) Int. Cl.⁴: **B 65 G 65/24**

(21) Anmeldenummer: **85109677.6**

(22) Anmeldetag: **01.08.85**

(54) Vorrichtung zum Vereinzeln und Ausrichten von gewendelten Zugfedern.

(30) Priorität: **07.09.84 DE 3432938**

(43) Veröffentlichungstag der Anmeldung:
**12.03.86 Patentblatt 86/11**

(45) Bekanntmachung des Hinweises auf die Patenterteilung:
**24.02.88 Patentblatt 88/8**

(84) Benannte Vertragsstaaten:
**AT BE CH DE FR GB IT LI LU NL SE**

(56) Entgegenhaltungen:
**DE-C-126 514**

(73) Patentinhaber: **Kuhmet, Siegmund, Bayreuther Strasse 37, D-8450 Amberg (DE)**

(72) Erfinder: **Kuhmet, Siegmund, Bayreuther Strasse 37, D-8450 Amberg (DE)**

(74) Vertreter: **Graf, Helmut, Dipl.- Ing., Patentanwälte Dipl.- Ing. A. Wasmeier Dipl.- Ing. H. Graf Greflinger Strasse 7 Postfach 382, D-8400 Regensburg (DE)**

**Beschreibung**

Die Erfindung bezieht sich auf eine Vorrichtung zum Vereinzeln und Ausrichten von gewendelten Zugfedern gemäß Oberbegriff Patentanspruch 1. Eine solche Vorrichtung gehört zum Stand der Technik.

Gewendelte Zugfedern werden bei der Herstellung von Bauteilen, Geräten usw. auf allen Gebieten der Technik sehr häufig verwendet und sind in der Regel so ausgebildet, daß diese Zugfedern an ihren Enden jeweils eine hakenförmige Abwinklung zum Einhängen bzw. Befestigen der Zugfedern aufweisen, und zwar in der Form, daß an den beiden Enden des gewendelten Teils der Zugfeder sich zunächst ein im wesentlichen geradlinig verlaufender Abschnitt anschließt, der dann in die eigentliche hakenförmige Abwinklung übergeht.

Die automatische Verarbeitung bzw. Montage von Zugfedern bereitet auch heute noch große Probleme, und zwar dann, wenn diese Zugfedern wahllos in einer beispielsweise von einem Vibrationstopf gebildeten Aufgabeeinrichtung oder -vorrichtung zur weiteren Verarbeitung bereitgestellt werden. Mit Hilfe einer besonderen Ausbildung der Aufgabeeinrichtung bzw. der an dieser Aufgabeeinrichtung vorgesehenen Führungsbahnen ist es da grundsätzlich möglich, die Zugfedern derart auszurichten, daß sie mit ihrer Längserstreckung in Förderrichtung liegend dem Montageautomaten zugeführt werden, wobei durch besondere Maßnahmen auch dafür gesorgt werden kann, daß nur solche Zugfedern an den Montageautomaten gefördert werden, die nicht ineinander verhängt sind, es sind jedoch bisher keine Vorrichtungen bekannt, mit denen ein zuverlässiges Ausrichten der Zugfedern um ihre Längserstreckung in der Weise möglich ist, daß sämtliche an den Montageautomaten geförderte bzw. weitergegebenen Zugfedern auch bezüglich der Lage ihrer hakenförmigen Abwinklungen eine der weiteren Verarbeitung bzw. der weiteren Montage entsprechende Ausrichtung aufweist, obwohl an sich von der Herstellung der Zugfedern her gewährleistet ist, daß die hakenförmigen Abwinklungen an beiden Enden einer Zugfeder relativ zueinander eine genau vorgegebene Lage besitzen.

Der Erfindung liegt die Aufgabe zugrunde, eine Vorrichtung aufzuzeigen, mit welcher nicht nur das Vereinzeln von Zugfedern, sondern vor allem auch deren Ausrichtung hinsichtlich der Lage der hakenförmigen Abwinklungen auf besonders einfache und zuverlässige Weise möglich ist.

Zur Lösung dieser Aufgabe ist eine Vorrichtung entsprechend dem kennzeichnenden Teil des Patentanspruches 1 ausgebildet.

Durch das in die Ausnehmung der Aufnahme hineinbewegbare schwertartige Element, welches mit einer Fläche gegen die wenigstens eine hakenförmige Abwinklung der auszurichtender Zugfeder, und zwar in dem zwischen der eigentlichen Abwinklung und dem gewendelten Teil der Zugfeder liegenden Abschnitt dieser Abwinklung, wird die auszurichtende Zugfeder um ihre Längsachse solange gedreht, bis sie die gewünschte ausgerichtete Lage aufweist. Nach dem Ausrichten wird dann die zunächst in ihrer ersten Stellung, d.h. in ihrer Ruhestellung befindliche Aufnahme in die zweite Stellung geschwenkt, in der das offene Ende der Ausnahme außerhalb der Führung liegt, so daß dann das über dieses offene Ende der Ausnehmung der Aufnahme vorstehende Ende der Zugfeder beispielsweise mit Hilfe eines Greifers aber einer Zange eines Montageautomaten oder aber mit Hilfe eines anderen Förderelementes erfaßt und die Zugfeder somit in der ausgerichteten Stellung der weiteren Verwendung zugeführt werden kann.

Die erfindungsgemäße Vorrichtung zeichnet sich durch eine relativ einfache und dennoch sehr zuverlässig arbeitende Konstruktion aus.

Weiterbildungen der Erfindung sind Gegenstand der Unteransprüche.

Die Erfindung wird im folgenden anhand der Figuren an einem Ausführungsbeispiel näher erläutert. Es zeigen:

Fig. 1 in vereinfachter Darstellung und im Längsschnitt eine Vorrichtung gemäß der Erfindung;

Fig. 2 einen Schnitt durch die Vorrichtung gemäß Fig. 1 gemäß der Linie I-I;

Fig. 3 in Einzeldarstellung und in Draufsicht das schwertartige Element der Vorrichtung gemäß Fig. 1, zusammen mit den dieses Element tragenden Teilen.

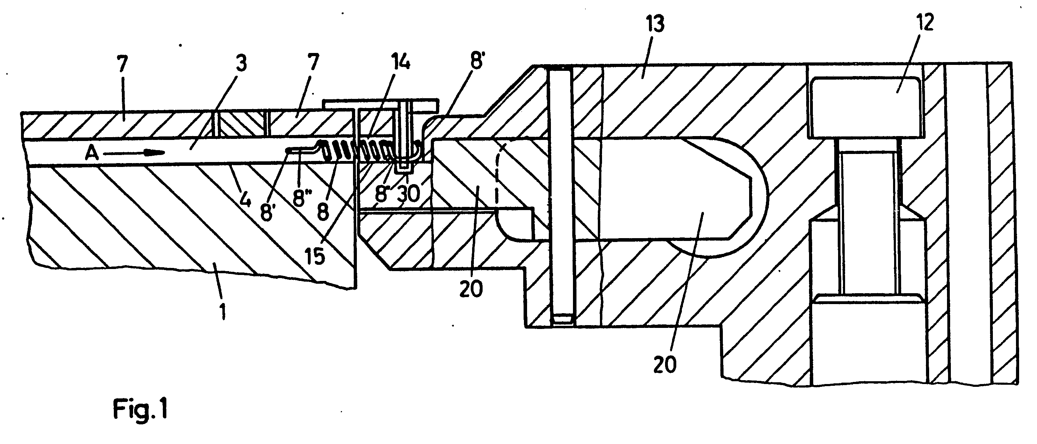

In den Figuren sind 1 und 2 Teile eines ortsfesten Führungsgestells. An der Oberseite des Teiles 1 sind eine sich im wesentlichen in horizontaler Richtung erstreckende geradlinige Führung in Form eines nutenförmigen Führungskanals 3 gebildet, der an seinem Boden 4 sowie an seinen beiden Längsseiten 5 und 6 geschlossen ist bzw. durchgehende Führungsflächen bilden und an seiner Oberseite zusätzlich auch durch eine Abdeckplatte 7 abgedeckt ist. Über den Führungskanal 3 werden Zugfedern 8 in Richtung des Pfeiles A, d.h. bei der für der Fig. 1 gewählten Darstellung von links nach rechts von einer nicht näher dargestellten Aufgabevorrichtung zugeführt, welche beispielsweise ein Vibrationstopf oder ähnliches Element sein kann. Die Bewegung der mit ihrer Längserstreckung in Richtung der Längserstreckung des Führungskanals 3 angeordneten und im Führungskanal 3 aufeinanderfolgenden Zugfedern 8 erfolgt in diesem Führungskanal beispielsweise mit Hilfe von Druckluft, die in Richtung des Pfeiles A den Führungskanal 3 durchströmt.

An dem der Aufgabevorrichtung für die Zugfedern 8 entfernt liegenden Ende, d.h. bei der für die Fig. 1 gewählten Darstellung am rechten Ende des Führungskanales 3 ist die Längsseite bzw. die in einer vertikalen Ebene liegende seitliche Führungs- oder Begrenzungsfläche dieses Kanals von der Fläche 9 eines Elementes 10 gebildet. welches mit Hilfe eines Gelenkstiftes 11 um eine horizontale, senkrecht zur Längserstreckung (Pfeil A) des Führungskanals 3 verlaufende Achse schwenkbar am ortsfesten Führungsteils 1 gehalten ist.

Mit Hilfe nicht näher dargestellter Antriebsmittel kann das Element 10 um die Achse des Gelenkstiftes 11 derart nach oben und unten geschwenkt werden, daß der die Fläche 9 aufweisende Abschnitt des Elementes 10 in der angehobenen Stellung dieses Elementes mit der Fläche 9 die Fortsetzung der Seitenfläche 6 bildet, und in der abgesenkten Stellung des Elementes 10 die Fläche 9 unterhalb der Bodenfläche bzw. des Bodens 4 des Führungskanales 3 liegt, so daß sich in der abgesenkten Stellung des Elementes 11 an dem der Aufgabeeinrichtung für die Zugfedern 8 entfernt liegenden Ende des Führungskanales 3 an der Längsseite 6 eine seitliche Öffnung im Führungskanal 3 ergibt, durch die die Zugfedern 8 nach dem Ausrichten mit ihrem in Förderrichtung nachfolgenden Ende zur weiteren Verwendung seitlich aus dem Führungskanal 3 herausgeschwenkt werden können, wie dies im einzelnen noch beschrieben wird.

An dem der Aufgabeeinrichtung für die Zugfedern 8 entfernt liegenden Ende des Führungskanales 3 ist weiterhin am ortsfesten Vorrichtungsteil 2 mit Hilfe eines Gelenkstiftes 12 eine Aufnahme 13 um eine horizontale Achse (entsprechend dem Doppelpfeil C) schwenkbar gelagert. Der Gelenkstift 13 ist dabei so angeordnet, daß sich seine Achse sowie die Verlängerung der Längsachse des Führungskanals 3 schneiden und der Gelenkstift 12 einen relativ großen Abstand von dem der Aufnahme 13, d.h. der der Aufgabevorrichtung für die Zugfedern 8 entfernt liegenden Ende des Führungskanals 3 aufweist. An der dem Führungskanal 3 zugewendeten Seite ist die Aufnahme 13 mit einer Ausnehmung 14 versehen, die an ihrer Unterseite durch eine geschlossene Bodenfläche 15, an ihren beiden Seiten durch jeweils eine vertikale Seitenfläche 16 bzw. 17 und an ihrem dem Führungskanal 3 abgewendeten Ende durch eine ebenfalls vertikale Stirnfläche 18 begrenzt ist, deren Abstand von dem dem Führungskanal 3 zugewendeten offenen Ende der Ausnehmung 14 kleiner ist als die Länge der Zugfedern 8.

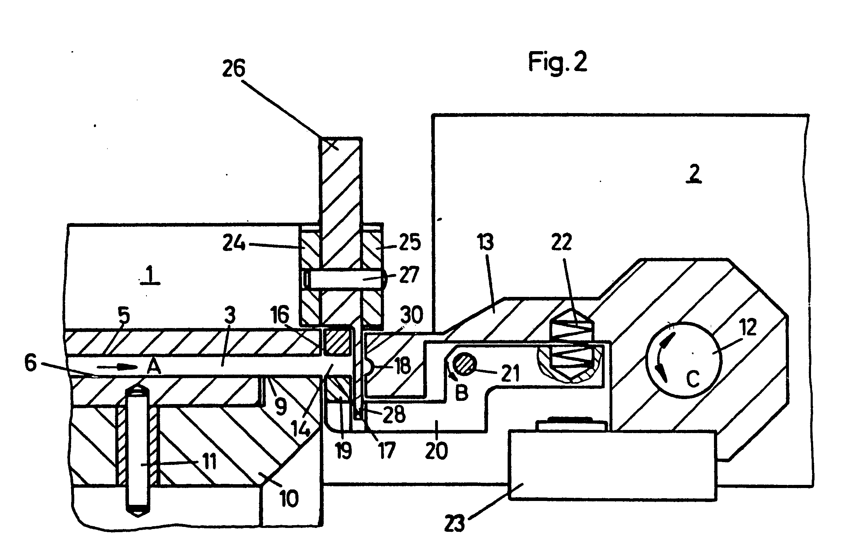

Bei der dargestellten Ausführungsform ist die Seitenfläche 17 der Ausnehmung 14 von einer Fläche eines Klemmbackens 19 gebildet, der an einem Ende eines doppelarmigen Hebels 20 befestigt ist, welcher seinerseits mit Hilfe eines Gelenkstiftes 21 um eine vertikale Achse an der Aufnahme 13 schwenkbar gehalten ist. Am anderen Ende des Hebels 21 greift eine zwischen diesem Hebel und der Aufnahme 13 wirkende Druckfeder 23 an, die den Hebel 20 und damit den Klemmbacken 19 in eine Stellung vorspannt, in der die Seitenfläche 17 einen Abstand von der Seitenfläche 16 aufweist, der etwas geringer als der Durchmesser der Zugfedern 8. Mit Hilfe eines Betätigungselements, beispielsweise mit Hilfe eines pneumatisch betätigbaren Steuerzylinders 23, der ebenfalls auf das dem Klemmbacken 19 entfernt liegende Ende des Hebels 20 einwirkt, kann dieser Hebel gegen die Wirkung der Druckfeder 22 im Sinne eines Entfernens der Seitenfläche 17 von der Seitenfläche 16 um den Gelenkstift 21 entsprechend dem Pfeil B der Fig. 2 geschwenkt werden.

Die Figuren zeigen die Aufnahme 13 in ihrer Ruhestellung, in welcher der Ausnehmung 14 die Fortsetzung des Führungskanals 13 bildet. Durch eine nicht näher dargestellte Antriebseinrichtung, beispielsweise ebenfalls durch einen pneumatisch betätigbaren Zylinder kann die Aufnahme 13 um den Gelenkstift 12 in Richtung des Pfeiles C derart geschwenkt werden, daß das offene Ende der Ausnehmung 14 seitlich vom Führungskanal 3 liegt, und zwar in einem Bereich, der beim Nachuntenschwenken des Elementes 10 von dem die Fläche 9 aufweisenden Teil dieses Elementes freigegeben wird. Selbstverständlich kann das Schwenken der Aufnahme 13 auch über einen größeren Winkelbereich erfolgen, falls dies für die Weitergabe der ausgerichteten Zugfedern 8 erforderlich sein sollte.

An der dem Element 10 gegenüberliegenden Seite ist zwischen zwei mit ihren Oberflächenseiten in vertikaler Richtung verlaufenden und senkrecht zur Längserstreckung des Führungskanals 3 liegenden Ansätze 24 und 25 ein Hebel 26 mit Hilfe eines Gelenkstiftes 27 frei schwenkbar gehaltert. Die Achse des Gelenkstiftes 27 liegt parallel zur Längserstreckung bzw. zur Mittelachse des Führungskanals 3. An seinem einen Ende ist der Hebel 26 als schwertartiges Element 28 mit verminderter Breite ausgebildet, welches mit seinen Oberflächenseiten in vertikalen Ebenen und quer zur Längserstreckung des Führungskanals 3 liegt und an seiner Unterseite eine V-förmige Ausnehmung 29 aufweist. Diese Ausnehmung liegt im Bereich der Mittelachse bzw. über der Mittelachse des Führungskanals 3.

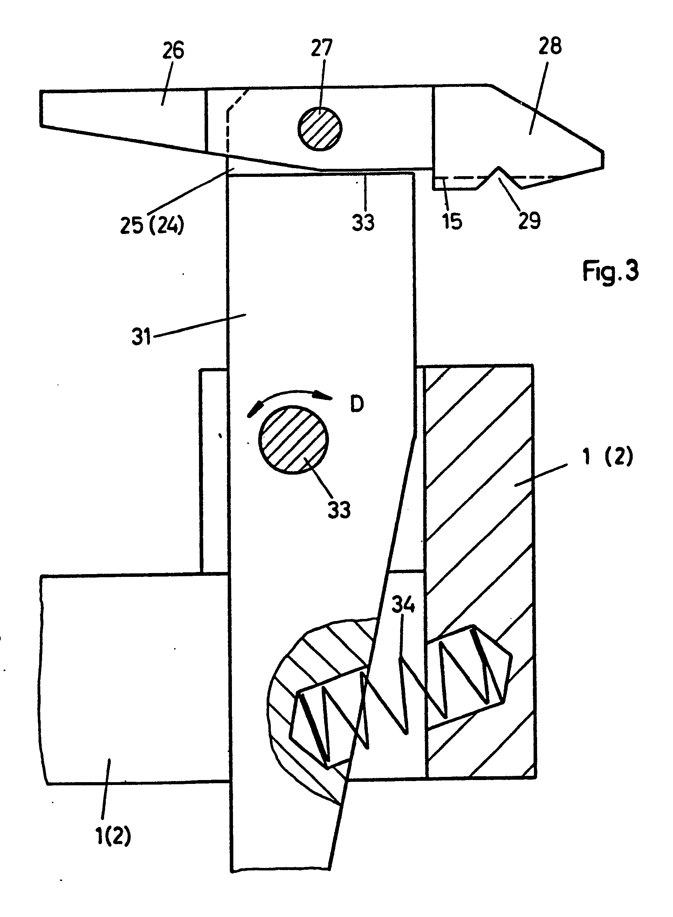

An der Ausnehmung 14 besitzt die Aufnahme 13 eine nutenförmige Ausnehmung 30, die quer zur Längserstreckung der Ausnehmung 14 verläuft und nicht nur im Bereich der Seitenfläche 16 bzw. in dem diese Seitenfläche bildenden Teil der Aufnahme 13 vorgesehen ist, sondern sich auch in die Bodenfläche 15 der Ausnenmung 14 erstreckt, so daß beim Absenken bzw. Schwenken des schwertartigen Elementes 28 aus einer über der Ausnehmung 14 liegenden Stellung in die Arbeitsstellung sich das schwertartige Element 28 mit dem mit der Ausnehmung 29 versehenen unteren Teilbereich in die Ausnehmung 14 soweit hineinbewegen kann, daß das geschlossene Ende der Ausnehmung 29 (entsprechend der unterbrochenen Linie 15 in der Figur 3) in etwa niveaugleich mit der Bodenfläche 15, oder aber mit geringem Abstand über dieser Bodenfläche 15 liegt, wobei dieser Abstand gleich der Drahtdurchmesser der Zugfedern 8 bzw. dem Durchmesser des für die Herstellung dieser Zugfedern verwendeten Federdrahtes ist.

Die beiden Ansätze 24 und 25 bilden das obere, gabelförmige Ende eines Hebels 31, der mit Hilfe eines Gelenkstiftes 32 um eine parallel zur Längserstreckung des Führungskanals 3 verlaufende Achse an einem der beiden Vorrichtungsteile 1 bzw. 2 schwenkbar gehaltert ist, wie dies mit dem Doppelpfeil D in der Fig. 3 angedeutet ist. Der Hebel 31 bildet mit einer zwischen den Ansätzen 24 und 25 liegenden Fläche 33 eine Abstützfläche für die Unterseite des Hebels 26 im Bereich zwischen dem Gelenkstift 27 und dem schwertartigen Element 28, so daß immer dann, wenn der Hebel 31 mit seinem oberen Ende von der Aufnahme 13 weggeschwenkt, d.h. bei der für die Fig. 3 gewählten Darstellung im Gegenuhrzeigersinn um den Gelenkstift 32 geschwenkt wird, das schwertartige Element 28 angehoben wird. Bei einer umgekehrten Schwenkbewegung des Hebels 31 wird das schwertartige Element 28 abgesenkt. Durch eine nicht näher dargestellte, zwischen dem Hebel 26 und dem Hebel 31 wirkende Feder oder Druckfeder ist dafür gesorgt, daß der Hebel 26 gegenüber dem Hebel 31 im Sinne einer Anlage gegen die Fläche 33 vorgespannt ist. Dies kann auch ohne Verwendung eines Federelementes durch entsprechende Gewichtsverteilung am Hebel 26 (einschließlich des Elementes 28) erzielt werden. Das Schwenken des Hebels 31 erfolgt mit einer nicht näher dargestellten Betätigungseinrichtung, beispielsweise durch eine Pneumatikzylinder. In diesem Fall ist der Hebel 31 dann vorzugsweise durch eine Druckfeder 34 in seine Endstellung vorgespannt und wird gegen die Wirkung dieser Druckfeder durch den Pneumatikzylinder in die andere Schwenkstellung bewegt.

Die Arbeitsweise der Vorrichtung läßt sich, wie folgt, beschreiben:

Die jeweils an beiden Enden mit hakenförmigen Abwinklungen 8' versehenen Zugfedern 8 werden über den Führungskanal 3 in Richtung des Pfeiles A zugeführt. Die Aufnahme 13 befindet sich in ihrer in den Figuren dargestellten Ruhestellung, so daß die erste Zugfeder 8 sich mit ihrem voreilenden Ende in die Ausnehmung 14 hineinbewegen kann und mit ihrer voreilenden Abwinklung 8' gegen die Fläche 18 zur Anlage kommt. Hierbei ist durch Betätigen des Zylinders 23 der Klemmbacken 19 so zur Seite geschwenkt, daß ein ungehindertes Eintreten der ersten Zugfeder in die Ausnehmung 14 möglich ist.

Sobald die erste Zugfeder 8 mit ihrer vorauseilenden Abwinklung 8' zur Anlage gegen die Fläche 18 gekommen ist, wird das zunächst noch angehobene schwertartige Element 28 durch Schwenken des Hebels 31 im Uhrzeigersinn abgesenkt, so daß dieses schwertartige Element schließlich im Bereich seiner Ausnehmung 29 mit der voreilenden Abwinklung 8' der teilweise in der Ausnehmung 14 angeordneten Zugfeder 8 in Berührung kommt, und zwar am geradlinig verlaufenden abschnitt 8'', der zwischen dem gebogenen Ende der Abwinklung 8' und dem gewendelten Teil der Zugfeder 8 vorgesehen ist. Aufgrund dieser Berührung zwizchen dem zeitlich von der Mittelachse der Zugfeder 8 liegenden Abschnitt 8'' und dem schwertartigen Element 28 wird die in der Ausnehmung 14 teilweise angeordnete Zugfeder 8 um ihre Längsachse beim weiteren Absenken des schwertartigen Elementes 28 derart gedreht, daß das freie Ende der Abwinklung 8 schließlich nach oben weist, wie dies in der Fig. 1 dargestellt ist. Dieses Drehen bzw. Ausrichten der Zugfeder 8 wird auch noch dadurch unterstützt, daß durch die beiden Gelenkstifte 27 und 32, die jeweils seitlich von der Führung 3 bzw. der Ausnehmung 14 angeordnet sind, das schwertartige Element 28 beim Schwenken des Hebels 31 nach Anlage mit der Zugfeder 8 nicht nur nach unten geschwenkt wird, sondern gleichzeitig auch eine seitliche, horizontale Bewegung quer zur Längserstreckung der Ausnehmung 14 ausführt. Sobald die Zugfeder 8 in dieser Weise ausgerichtet ist, wird der Klemmbacken 19 auf die Fläche 16 zugeschwenkt, wodurch die ausgerichtete Zugfeder 8 verdrehungssicher in der Ausnahme 13 gehalten ist. Anschließend wird das Element 10 abgesenkt bzw. nach unten geschwenkt, so daß dieses Element die seitliche Öffnung an der Längsseite 6 des Führungskanals 3 freigibt. Nun wird die Aufnahme 13 um den Gelenkstift 12 in Richtung des Pfeiles C geschwenkt, wodurch das der Fläche 18 entfernt liegende bzw. bei der Bewegung in Führungskanal 3 nachgeführte Ende der ausgerichteten Zugfeder 8 seitlich vom Führungskanal 3 liegt und an seiner Abwinklung 8' mit Hilfe eines nicht näher dargestellten Greifers erfaßt werden kann. Sobald der Greifer die ausgerichtete Zugfeder 8 erfaßt hat, wird der Pneumatikzylinder 23 zum Lösen des Klemmbackens 19 erneut betätigt und die ausgerichtete Zugfeder 8 kann dann von dem Greifer beispielsweise für den automatischen Einbau in ein Werkstück weggeführt werden.

**Patentansprüche**

1. Vorrichtung zum Vereinzeln und Ausrichten von gewendelten Zugfedern (8), die jeweils an wenigstens einem Ende eine hakenförmige Abwinklung (8') aufweisen, mit einer Führung (3), über die die mit ihrer Längserstreckung in Richtung der Führung liegenden Zugfedern von einer Aufgabeeinrichtung zugeführt werden, dadurch gekennzeichnet, daß sich an das der Aufgabeeinrichtung für die Zugfedern (8) entfernt liegende Ende der Führung (3) eine mit einer Ausnehmung (14) versehene Aufnahme (13) anschließt, daß die Aufnahme (13) in einer quer zur Richtung der Führung verlaufenden Achse schwenkbar ist, und zwar aus einer ersten Stellung, in der die Ausnehmung (14) der Aufnahme (13) der Führung (3) mit einer Öffnung zum Einführen der Zugfedern (8) in die Aufnahme (13) zugewandt ist und die Fortsetzung der Führung (3) bildet bzw. mit ihrer Längserstreckung achsgleich mit der Längserstreckung der Führung (3) liegt, in eine zweite Stellung, in der das in der ersten Stellung der Führung (3) zugewendete Ende der Ausnehmung (14) bzw. die dort vorgesehene Öffnung der Aufnahme (13) außerhalb der Führung (3) liegen, und daß im Bereich eines der Führung (3) in der ersten Stellung der Aufnahme entfernt liegenden Endes (18) der Ausnehmung (14) ein schwertartiges Element (28) vorgesehen ist, welches in einer Richtung quer bzw. senkrecht zur Ausnehmung (14) in diese Ausnehmung derart hineinbewegbar ist, daß das schwertartige Element (28) im Bereich einer Fläche (29) mit der voreilenden Abwinklung (8') der Zugfeder (8) in Berührung kommt.

2. Vorrichtung nach Anspruch 1, dadurch gekennzeichnet, daß die Fläche von der Fläche einer Ausnehmung (29) des schwertartigen Elements gebildet ist.

3. Vorrichtung nach Anspruch 1 oder 2, dadurch gekennzeichnet, daß die Aufnahme (13) um eine vertikale Achse (12) aus der ersten Stellung in die zweite Stellung und umgekehrt schwenkbar ist, und daß an einer Seite der Führung (3) eine verschließbare Öffnung vorgesehen ist.

4. Vorrichtung nach einem der Ansprüche 1 bis 3, dadurch gekennzeichnet, daß das schwertartige Element an einem Hebel (26, 31) vorgesehen ist, welcher um eine vorzugsweise in Längserstreckung der Führung (3) verlaufende Achse (27, 32) schwenkbar ist.

5. Vorrichtung nach Anspruch 4, dadurch gekennzeichnet, daß das schwertartige Element (28) an einem Hebel (26) vorgesehen ist, welcher an einem weiteren Hebel (31) mit Hilfe eines ersten Gelenkstiftes (27) gehaltert ist, und daß der weitere Hebel (31) mit Hilfe eines zweiten Gelenkstiftes (32) an einem ortsfesten Vorrichtungsteil schwenkbar befestigt ist.

6. Vorrichtung nach Anspruch 5, dadurch gekennzeichnet, daß die Achsen der beiden Gelenkstifte (27, 32) parallel zueinander liegen.

7. Vorrichtung nach Anspruch 5 oder 6, dadurch gekennzeichnet, daß der erste Gelenkstift (27) mit Abstand über dem zweiten Gelenkstift (32) angeordnet ist.

8. Vorrichtung nach einem der Ansprüche 5 bis 7, dadurch gekennzeichnet, daß der Hebel (26) eine Fläche aufweist, die unter Vorspannung gegen eine Fläche (33) des weiteren Hebels (31) anliegt.

9. Vorrichtung nach einem der Ansprüche 1 bis 8, dadurch gekennzeichnet, daß wenigstens eine Seitenfläche (17) der Ausnehmung (14) der Aufnahme (13) von einer Fläche eines quer zur Längserstreckung der Ausnehmung (13) bewegbaren Klemmbackens (19) gebildet ist.

**Claims**

1. Device for singling out and aligning coiled tension springs (8) which each have a hook-shaped angled portion (8') at at least one end, with a guide (3), via which the tension springs lying with their longitudinal extension in the direction of the guide are delivered by a feed arrangement, characterized in that a receptacle (13) provided with a recess (14) is adjacent to the end of the guide (3) remote from the feed arrangement for the tension springs (8), in that the receptacle (13) is pivotable about an axis extending transversely relative to the direction of the guide, specifically from a first position, in which the recess (14) in the receptacle (13) faces the guide (3) with an orifice for inserting the tension springs (8) into the receptacle (13) and forms the continuation of the guide (3) or is arranged with its longitudinal extension in the same axis as the longitudinal extension of the guide (3), into a second position, in which the end of the recess (14) facing the guide (3) in the first position or the orifice in the receptacle (13) located there is outside the guide (3), and in that in the region of one end (18) of the recess (14) remote from the guide (3) in the first position of the receptacle there is a sword-like element (28) which can be moved into the recess (14) in a direction transverse or perpendicular to the latter, in such a way that the sword-like element (28) comes in contact with the leading angled portion (8') of the tension spring (8) in the region of a face (29).

2. Device according to Claim 1, characterized in that the face is formed by the face of a recess (29) in the sword-like element.

3. Device according to Claim 1 or 2, characterized in that the receptacle (13) is pivotable about a vertical axle (12) from the first position into the second position, and vice versa, and in that a closeable orifice is provided on one side of the guide (3).

4. Device according to one of Claims 1 to 3, characterized in that the sword-like element is located on a lever (26, 31) which is pivotable about an axle (27, 32) preferably arranged in the longitudinal extension of the guide (3).

5. Device according to Claim 4, characterized in that the sword-like element (28) is located on a lever (26) which is mounted on a further lever (31) by means of a first joint pin (27), and in that the further lever (31) is fastened pivotably to a fixed device part by means of a second joint pin (32).

6. Device according to Claim 5, characterized in that the axes of the two joint pins (27, 32) are parallel to one another.

7. Device according to Claim 5 or 6, characterized in that the first joint pin (27) is arranged at a distance above the second joint pin (32).

8. Device according to one of Claims 5 to 7, characterized in that the lever (26) has a face which rests under pre-stress against a face (33) of the further lever (31).

9. Device according to one of Claims 1 to 8, characterized in that at least one side face (17) of the recess (14) in the receptacle (13) is formed by a face of a clamping jaw (19) moveable transversely relative to the longitudinal extension of the recess (13).

**Revendications**

1. Dispositif pour séparer et orienter des ressorts hélicoïdaux de traction (8) qui sont dotés chacun au moins à une extrémité d'un prolongement en forme de crochet (8'), qui comprend une glissière de guidage (3), au-delà de laquelle les ressorts de traction, se trouvant avec leur extension longitudinale dans le sens de la glissière, sont amenés par un système d'alimentation, ledit dispositif étant caractérisé : en ce qu'un récepteur (13) pourvu d'une cavité (14) se joint à l'extrémité de la glissière (3) éloignée du système d'alimentation des ressorts de traction (8) ; en ce que le récepteur (13) est pivotant, autour d'un axe décentré transversalement par rapport à la direction de la glissière, à partir d'une première position, dans laquelle la cavité (14) du récepteur (13) de la glissière (3) est en regard avec une ouverture pour l'introduction du ressort de traction (8) dans le récepteur (13) et forme la continuation de la glissière (3), c'est-à-dire s'étend avec son extension longitudinale suivant le même axe que l'extension longitudinale de la glissière (3), jusqu'à une deuxième position dans laquelle l'extrémité de la cavité (14) en regard de la glissière (3) dans la première position, c'est-à-dire l'ouverture du récepteur (13) prévue là, se trouve à l'écart de la glissière (3) ; et en ce que, au voisinage d'une extrémité (18) de la glissière (3) se trouvant éloignée de la cavité (14), il est prévu un élément à effet de lame (28), lequel est mobile transversalement dans une direction, c'est-à-dire verticalement vers la cavité (14), pour pénétrer dans cette cavité ; et en ce que l'élément à effet de lame (28), dans la zone d'une surface (29), vient en contact avec le prolongement prohéminent (8') du ressort de traction (8).

2. Dispositif selon la revendication 1, caractérisé en ce que la surface est formée des surfaces d'une encoche (29) de l'élément à effet de lame.

3. Dispositif selon une des revendications 1 ou 2, caractérisé en ce que le récepteur (13) est pivotant autour d'un axe vertical (12), à partir de la première position vers la deuxième position, et inversement ; et en ce qu'une ouverture susceptible d'être fermée est prévue à une extrémité de la glissière (3).

4. Dispositif selon l'une des revendications 1 à 3, caractérisé en ce que l'élément à effet de lame est muni d'un levier (26, 31) qui est orientable autour d'un axe décalé (27, 32), de préférence suivant l'extension longitudinale de la glissière (3).

5. Dispositif selon la revendication 4, caractérisé en ce que l'élément à effet de lame (28) est muni d'un levier (26) qui est porté sur un autre levier (31) au moyen d'une première broche d'articulation (27) et en ce que l'autre levier (31) est porté, au moyen d'une deuxième broche d'articulation (32), par une partie fixe du dispositif.

6. Dispositif selon la revendication 5, caractérisé en ce que les axes des deux broches d'articulation (27, 32) sont parallèles l'un à l'autre.

7. Dispositif selon l'une des revendications 5 ou 6, caractérisé en ce que la première broche d'articulation (27) est située, avec un intervalle, au-dessus de la deuxième broche d'articulation (32).

8. Dispositif selon l'une des revendications 5 à 7, caractérisé en ce que le levier (26) présente une surface qui, sous pré-tension, porte contre une surface (33) de l'autre levier (31).

9. Dispositif selon l'une des revendications 1 à 8, caractérisée en ce qu'au moins une surface latérale (17) de la cavité (14) du récepteur (13) est constituée par une surface d'une mâchoire de serrage (19) mobile transversalement par rapport à l'extension longitudinale de la cavité.

0 173 863

Fig.1

Fig.2

Fig.3